# EUROPÄISCHE PATENTSCHRIFT

(11) **EP 2 626 126 B1**
(45) Veröffentlichungstag und Bekanntmachung des Hinweises auf die Patenterteilung: **15.03.2017**
(21) Anmeldenummer: 12196974.5
(22) Anmeldetag: 13.12.2012
(51) Int. Cl.: B01D 61/22, B01D 65/02, C02F 1/44

(54) **Verfahren zur Steuerung und/oder Regelung von Filteranlagen zur Ultrafiltration**
Method for controlling and/or regulation of filter systems for ultrafiltration
Procédé de commande et/ou de réglage d'installations de filtrage pour l'ultrafiltration

(30) Priorität: 13.02.2012 DE 102012202111
(43) Veröffentlichungstag der Anmeldung: 14.08.2013
(73) Patentinhaber: Krones AG, 93073 Neutraubling (DE)
(72) Erfinder: Scheu, Dirk, 73441 Bopfingen (DE); Zacharias, Jörg, 93096 Köfering (DE)
(74) Vertreter: Grünecker Patent- und Rechtsanwälte PartG mbB

(56) Entgegenhaltungen:
- WO-A1-98/34176
- WO-A1-2008/132186
- US-A1- 2005 258 098
- AIDAN A ET AL: "Neural network modeling and optimization of scheduling backwash for membrane bioreactor", CLEAN TECHNOLOGIES AND ENVIRONMENTAL POLICY, SPRINGER, BERLIN, DE, Bd. 10, Nr. 4, 12. Dezember 2007 (2007-12-12), Seiten 389-395, XP019636492, ISSN: 1618-9558
- DELGRANGE-VINCENT N ET AL: "Neural networks for long term prediction of fouling and backwash efficiency in ultrafiltration for drinking water production", DESALINATION, ELSEVIER, AMSTERDAM, NL, Bd. 131, Nr. 1-3, 20. Dezember 2000 (2000-12-20), Seiten 353-362, XP004306366, ISSN: 0011-9164, DOI: 10.1016/S0011-9164(00)90034-1
- TEODOSIU C ET AL: "Neural network models for ultrafiltration and backwashing", WATER RESEARCH, ELSEVIER, AMSTERDAM, NL, Bd. 34, Nr. 18, 15. Dezember 2000 (2000-12-15), Seiten 4371-4380, XP004236265, ISSN: 0043-1354, DOI: 10.1016/S0043-1354(00)00217-7
- CURCIO S ET AL: "Reduction and control of flux decline in cross-flow membrane processes modeled by artificial neural networks", JOURNAL OF MEMBRANE SCIENCE, ELSEVIER SCIENTIFIC PUBL.COMPANY. AMSTERDAM, NL, Bd. 286, Nr. 1-2, 15. Dezember 2006 (2006-12-15), Seiten 125-132, XP024931610, ISSN: 0376-7388, DOI: 10.1016/J.MEMSCI.2006.09.024 [gefunden am 2006-12-15]
- CAKMAKCI M ET AL: "A modeling approach for iron concentration in sand filtration effluent using adaptive neuro-fuzzy model", EXPERT SYSTEMS WITH APPLICATIONS, OXFORD, GB, Bd. 37, Nr. 2, 1. März 2010 (2010-03-01), Seiten 1369-1373, XP026736193, ISSN: 0957-4174, DOI: 10.1016/J.ESWA.2009.06.082 [gefunden am 2009-07-05]
- PERROT N ET AL: "Automatic control of the crossflow microfiltration process using fuzzy logic", JOURNAL OF MEMBRANE SCIENCE, ELSEVIER SCIENTIFIC PUBL.COMPANY. AMSTERDAM, NL, Bd. 116, Nr. 1, 24. Juli 1996 (1996-07-24) , Seiten 93-105, XP004041542, ISSN: 0376-7388, DOI: 10.1016/0376-7388(96)00027-0

## Beschreibung

### Gebiet der Erfindung

Die vorliegende Erfindung betrifft ein Verfahren zur Steuerung und/oder Regelung einer Filteranlage zur Ultrafiltration von Fluiden.

### Stand der Technik

Filteranlagen mit Ultrafiltrationsfiltern werden in der Industrie, Medizin und Umwelttechnik in vielfacher Weise eingesetzt. Zu den häufigsten Einsatzgebieten zählt die Filtration von Frischwasser, Recycling von Brauchwässern, aber auch die Filtration von Abwässern, auch industrieller Art, von Bier oder Fruchtsäften. Darüber hinaus ist der Einsatz in der Medizintechnik zur Abtrennung von Proteinen, Impfstoffen oder Antibiotika aus Flüssigkeiten bis hin zur Dialyse bekannt.

Filteranlagen zur Ultrafiltration werden dabei üblicherweise nach einem rechten starren Ablauf betrieben, welcher durch wenige Parameter typischerweise von Experten innerhalb enger Grenzen angepasst werden kann. Im Allgemeinen ist jedoch der gemeine Anlagenbetreiber an die vor der Inbetriebnahme der Anlage vorgegebenen und vielfach vorprogrammierten Programme zur Steuerung und/oder Regelung der Filteranlage gebunden. Dadurch ist eine Anpassung der Betriebsweise der Filteranlage an veränderliche Prozessbedingungen, wie z.B. veränderliche Rohwasserqualität, veränderliche Temperatur, veränderliche Beladungszyklen sowie Veränderung des Filters, entweder nicht oder nur durch den Einsatz eines geschulten Experten möglich.

Im Produktionsprozess setzen sich abzufiltrierende Stoffe auf dem Ultrafiltrationsfilter ab, wodurch der Filterwiderstand ansteigt und schließlich die Effizienz der Filtrationsprozesses sinkt. Durch dieses sogenannte Filterfouling bedingt ist eine regelmäßige Reinigung von Ultrafiltrationsfiltern, z.B. durch Rückspülen nötig. Dabei ist das durchzuführende Rückspülen im Stand der Technik ebenso an einen starren Programmablauf gekoppelt, welcher nach festen Werten und Zeiten die Filtration und das Rückspülen regelt.

Durch die bei der Inbetriebnahme der Anlage fest vorgegebenen Programmabläufe wird schlussendlich eine Optimierung des Betriebs der Anlage inklusive der Filterreinigung erschwert bzw. unmöglich gemacht. Dadurch gerät insbesondere die Produktionssicherheit und Produktsicherheit der Anlage in Gefahr. Darüber hinaus können Ressourcen wie Rückspülwasser, Luft und Energie nicht effizient genutzt werden.

Somit liegt der vorliegenden Erfindung die Aufgabe zugrunde, ein Verfahren zur intelligenten Steuerung und/oder Regelung von Filteranlagen zur Ultrafiltration von Fluiden zur Verfügung zu stellen, das die oben genannten Nachteile überwindet. Insbesondere soll eine Optimierung der Filtration- und Filterreinigungsprozesse im Hinblick auf Produktionssicherheit und effiziente Ressourcennutzung auch ohne umfangreiches Expertenwissen ermöglicht werden. Zudem soll das Verfahren in der Lage sein, auf veränderliche Prozessbedingung angepasst und flexibel zu reagieren.

Der Artikel "Neural network modeling and optimization of scheduling backwash for membrane bioreactor" in Clean Techn Environ Policy 2008 von Aidan et al. beschreibt die Verwendung eines künstlichen neuronalen Netzes, um den Fluss durch eine Membran eines Bioreaktors als Funktion der Rückspül- und Filtrierzeiten vorherzusagen.

Die internationale Patentanmeldung WO 2008/132186 A1 offenbart ein Verfahren zur automatischen und optimierten Regelung der Reinigung von Filtermembranen, insbesondere im Hinblick auf das Filterfouling, im Bereich der Abwasserreinigung auf der Grundlage einer Fuzzy-Logik. Für jeden Kontrollparameter des Kontrollsystems sieht das beschriebene Verfahren einen separaten Fuzzy-Logik-Kontrollblock vor, welcher in Abhängigkeit von Eingangsgrößen, welche die gemessene Tendenz der Membran zum reversiblen bzw. irreversiblen Fouling sowie weitere Messdaten, wie z. B. die Temperatur des Fluids im Zustrom, umfassen, eine Regelung von Sollwertparametern vornimmt.

Die US Patentanmeldung US 2005/0258098 A1 beschreibt das Modellieren des Zusetzens eines Membranfilters mit Hilfe eines neuronalen Netzes, um ein irreversibles Verstopfen der Membran zu vermeiden.

In ähnlicher Weise beschreibt der Artikel "Neural networks for long term prediction of fouling and backwash efficiency in ultrafiltration for drinking water production" in Desalination 131 (2000) von Delgrange-Vincent et al. die Verwendung eines neuronalen Netzes, um die Langzeitentwicklung einer Ultrafiltrationsanlage, insbesondere in Hinblick auf reversibles und irreversibles Fouling des Filters, vorherzusagen.

### Beschreibung der Erfindung

Die oben genannte Aufgabe wird gelöst durch ein Verfahren zur Steuerung und/oder Regelung einer Filteranlage zur Ultrafiltration von Fluiden mit einem Filter, wobei die Steuerung und/oder Regelung auf der Grundlage einer Fuzzy-Logik und/oder künstlicher neuronaler Netze erfolgt.

Insbesondere kann es sich bei dem zu filternden Fluid um eine Flüssigkeit, beispielsweise um Wasser, insbesondere um Frischwasser handeln. Hierbei kommt in der Regel die Ultrafiltration zum Einsatz. Alternativ kann das erfindungsgemäße Verfahren zur Mikrofiltration von beispielsweise Abwasser, Bier, oder Fruchtsäften eingesetzt werden. Darüber hinaus ist ein Einsatz des erfindungsgemäßen Verfahrens zur Abtrennung von Proteinen, Impfstoffen oder Antibiotika aus Flüssigkeiten, zum Fraktionieren von Proteinen, zur Dialyse, sowie zur sogenannten kalten Sterilisation vorstellbar.

Bei der Ultrafiltration liegt die Größe der abzutrennenden Partikel bzw. Moleküle im Bereich von 0,5 nm bis 500 nm (nm = 10⁻⁹ m), insbesondere im Bereich von 1 nm bis 300 nm. Bei den abzutrennenden Partikeln bzw. Molekülen kann es sich um wasserunlösliche Salze, Zucker, Viren, Bakterien, Proteine oder Kolloide handeln.

Dabei kann die Ultrafiltration als Dead-End-Filtration oder als Cross-Flow-Filtration durchgeführt werden. Bei einer Dead-End-Filtration wird das zu filternde Fluid mit möglichst niedrigem Druck gegen den Filter gepumpt, während bei einer Cross-Flow-Filtration das zu filternde Fluid den Filter tangential anströmt. In beiden Fällen tritt durch den Filter das Filtrat (auch Permeat) hindurch, während die abgetrennten Partikel bzw. Moleküle als Konzentrat (auch Retentat) im Einlaufbereich des Filters, somit in Strömungsrichtung vor dem Filter, verbleiben. Bei der Cross-Flow-Filtration strömt im Allgemeinen das mit abgetrennten Partikeln bzw. Molekülen aufkonzentrierte Fluid durch den Auslauf des Filters wieder aus, während bei der Dead-End-Filtration im Allgemeinen kein solcher Auslauf vorhanden ist.

Bei dem Filter kann es sich um einen Membranfilter oder einen Hohlfaserfilter handeln. Bei den Membranen kann es sich um Flachmembranen oder Tubularmembranen handeln. Insbesondere können poröse Keramikmembrane als Filter dienen. Insbesondere können aber Kunststoffmembrane aus z.B. Polyethersulfon eingesetzt werden. Ausprägungen dabei können Hohlfasermembrane mit einem oder mehreren Kanälen oder auch Wickelmembrane sein.

In der Fuzzy-Logik können komplexe Probleme durch die Verwendung von unscharfen Regeln einfach beschrieben werden. Dabei wird für jede konkrete Eingangsgröße mit Hilfe der Zugehörigkeitsfunktion der unscharfen Menge (Fuzzy-Menge) eines linguistischen Wertes der Zugehörigkeitsgrad zu dem entsprechenden linguistischen Wert bestimmt.

Das erfindungsgemäße Verfahren umfasst das Erfassen zumindest einer ersten und einer zweiten Prozessgröße der Filteranlage (als Eingangsgrößen), das Bestimmen eines ersten Zugehörigkeitsgrads der ersten Prozessgröße zu einem ersten linguistischen Wert auf der Grundlage einer ersten vorbestimmten Zugehörigkeitsfunktion, das Bestimmen eines zweiten Zugehörigkeitsgrads der zweiten Prozessgröße zu einem zweiten linguistischen Wert auf der Grundlage einer zweiten vorbestimmten Zugehörigkeitsfunktion, das logische Verknüpfen des ersten und zweiten linguistischen Wertes gemäß zumindest einer ersten vorbestimmten Regel zum Bestimmen einer ersten resultierenden Zugehörigkeitsfunktion der Aktion der ersten vorbestimmten Regel, das Bestimmen einer Gesamtzugehörigkeitsfunktion auf der Grundlage der ersten resultierenden Zugehörigkeitsfunktion der Aktion der zumindest ersten vorbestimmten Regel, das Erhalten einer Ausgangsgröße aus der Gesamtzugehörigkeitsfunktion sowie das Steuern und/oder Regeln der Filteranlage in Abhängigkeit von der Ausgangsgröße.

Dabei kann insbesondere ein Reinigungsprozess des Filters in Abhängigkeit von der Ausgangsgröße gesteuert oder geregelt werden.

Die Anwendung der Fuzzy-Logik zur Steuerung und/oder Regelung der Filteranlage ermöglicht dabei, die Prozessführung durch Vorgeben einfacher und intuitiver linguistischer Regeln und Werte zu beeinflussen, und erweitert somit die Einflussmöglichkeiten des Anlagenbetreibers auf den optimalen Betrieb der Filteranlage.

Das Erfassen der Prozessgrößen kann insbesondere durch Messung, insbesondere durch Sensoren, insbesondere im Bereich des Filters geschehen.

Ergänzend können für die erfassten Prozessgrößen Wertebereiche definiert werden, welche durch Definition geeigneter Fuzzy-Mengen partitioniert werden können. Dabei werden entsprechende linguistische Werte mit den Fuzzy-Mengen assoziiert. Die Partitionen und insbesondere die Zugehörigkeitsfunktionen der Fuzzy-Mengen können hierbei durch geeignete Parameter parametrisiert werden, wobei die Parameter in einer Weiterführung durch ein künstliches neuronales Netz angepasst werden können. Zum Beispiel können als Zugehörigkeitsfunktionen Dreiecksfunktionen verwendet werden, deren Parameter die Breite der Basis und die Lage der Spitze sind. Weitere Beispiele für Zugehörigkeitsfunktionen der Fuzzy-Mengen sind Trapez- und Gaußfunktionen, wobei Gaußfunktionen den Vorteil stetiger Differenzierbarkeit aufweisen und damit besonders für den Einsatz innerhalb von Optimierungsverfahren basierend auf der Methode der steilsten Gradienten geeignet sind. Es kann, wenn gewünscht, für jede Fuzzy-Menge eine andere Zugehörigkeitsfunktion definiert werden.

In der Fuzzy-Theorie umfasst eine Regel, genauer linguistische Regel, eine Anzahl von Prämissen in der Form einer Zugehörigkeit einer Anzahl von Eingangsgrößen zu einer Anzahl linguistischer Werte, welche durch logische Verknüpfung miteinander verbunden werden, die sogenannte Vorbedingung der Regel, und eine Aktion in der Form einer Zugehörigkeitsfunktion einer Ausgangsgröße zu einem linguistischen Wert (im allgemeinen als 'Wenn-Dann' Form bezeichnet).

Bei dem erfindungsgemäßen Verfahren kann jede Regel durch einen Experten vorgegeben werden oder durch ein automatisiertes Verfahren erlernt werden. Bei dem automatisierten Verfahren kann es sich insbesondere um ein künstliches neuronales Netz handeln. Ein solches künstliches neuronales Netz kann dabei durch Beobachtung, d.h. Protokollieren und Auswerten geeigneter Prozessdaten der Filteranlage Regeln neu erlernen oder anpassen, wobei die Beobachtung insbesondere während des Prozessbetriebes durch einen Experten stattfinden kann.

Eine vorbestimmte oder erlernte Regel kann weiterhin durch Optimierungsschritte angepasst werden. Dabei kann ein Optimierungsschritt die Anpassung der oben erwähnten Parameter einer zu einem in einer Regel verwendeten linguistischen Wert gehörenden Fuzzy-Menge oder eine Priorisierung bzw. Eliminierung der Regel umfassen. Eine Priorisierung bzw. Eliminierung kann dabei insbesondere durch Setzen oder Anpassen von Wichtungen einer Regel beim erfindungsgemäßen Bestimmen einer Gesamtzugehörigkeitsfunktion auf der Grundlage der resultierenden Zugehörigkeitsfunktion der Aktion der Regel geschehen.

Bei der Verschiebung einer Fuzzy-Menge durch Anpassung ihrer Parameter in einem Optimierungsschritt kann insbesondere die Zugehörigkeit der Fuzzy-Menge zu einem zuvor definierten Wertebereich der entsprechenden Prozessgröße als Randbedingung einfließen.

Die logische Verknüpfung zweier oder mehrerer linguistischer Werte kann durch die üblichen logischen Operatoren, insbesondere durch UND, ODER sowie XOR geschehen. Dabei können binäre, ternäre oder auch Operatoren mit mehr als drei Operanden zum Einsatz kommen. Darüber hinaus kann auf jeden linguistischen Wert die unäre Operation der Negation angewendet werden.

Bei der logischen UND Verknüpfung zweier oder mehrerer linguistischer Werte der Prämissen einer Regel kann der Grad der Vorbedingung der Regel insbesondere durch das Minimum der Zugehörigkeitsgrade der Eingangsgrößen zu ihren entsprechenden linguistischen Werten gebildet werden. Bei der logischen ODER Verknüpfung zweier oder mehrerer linguistischer Werte der Prämissen kann der Grad der Vorbedingung insbesondere durch das Maximum der Zugehörigkeitsgrade der Eingangsgrößen zu ihren entsprechenden linguistischen Werten gebildet werden. Alternativ können die logische UND Verknüpfung und/oder die logische ODER Verknüpfung mit Hilfe von beschränkten Summen durchgeführt werden.

Das Bestimmen einer resultierenden Zugehörigkeitsfunktion einer Aktion einer Regel geschieht über das Umlegen des Grads der Vorbedingung der Regel, also der logisch verknüpften Prämissen, des 'Wenn'-Teils der Regel, auf den linguistischen Wert der Aktion der Regel, des 'Dann'-Teils der Regel. Das Umlegen, auch Inferenz genannt, kann dabei erfolgen, indem das Minimum zwischen dem Grad der Vorbedingung und der Zugehörigkeitsfunktion der Aktion gebildet wird, also durch graphisches 'Abschneiden' der Zugehörigkeitsfunktion der Aktion auf Höhe des Grades der Vorbedingung. Alternativ dazu kann das Umlegen durch Produktbildung zwischen dem Grad der Vorbedingung und der Zugehörigkeitsfunktion der Aktion geschehen.

Eine Regel kann zwei oder mehr Prämissen, somit zwei oder mehr linguistische Werte, als Vorbedingung umfassen. Dabei können zwei oder mehr linguistische Werte gleich sein. Alternativ oder ergänzend können zwei oder mehr Prozessgrößen, die zu den linguistischen Werten der Vorbedingung gehören, gleich sein.

Das Bestimmen einer Gesamtzugehörigkeitsfunktion auf der Grundlage der ersten resultierenden Zugehörigkeitsfunktion der Aktion der zumindest ersten vorbestimmten Regel kann insbesondere durch Gleichsetzen der Gesamtzugehörigkeitsfunktion mit der resultierenden ersten Zugehörigkeitsfunktion der Aktion geschehen. Dabei kann die resultierende erste Zugehörigkeitsfunktion ergänzend durch Wichtung, insbesondere durch Multiplikation mit einer Wichtungsfunktion über den Bereich einer Ausgangsgröße der Aktion der Regel, und/oder durch Abschneiden an vorbestimmten Grenzen des Wertebereichs der Ausgangsgröße modifiziert werden.

Das Erhalten einer Ausgangsgröße (Defuzzyfizieren) aus der Gesamtzugehörigkeitsfunktion kann insbesondere durch Bestimmen des Abszissenwertes des Schwerpunktes der unter der Gesamtzugehörigkeitsfunktion gelegenen Fläche geschehen. Alternativ dazu kann gemäß der Max-Kriterium Methode ein beliebiger Wert der Ausgangsgröße ausgewählt werden, für den die Gesamtzugehörigkeitsfunktion ein Maximum hat. Ebenso kann gemäß der Mean-of-Maxima Methode der Mittelwert über die Menge der Werte der Ausgangsgröße, für die die Gesamtzugehörigkeitsfunktion ihr (globales) Maximum annimmt, als Wert der Ausgangsgröße gewählt werden. In einer alternativen Ausführung, insbesondere, wenn die Gesamtzugehörigkeitsfunktion auf der Grundlage einer einzigen resultierenden Zugehörigkeitsfunktion einer einzigen Regel bestimmt wird, kann die Ausgangsgröße auf der Grundlage des Maximums der resultierenden Zugehörigkeitsfunktion oder des Grades der Vorbedingung der einzigen Regel bestimmt werden. In den oben genannten Fällen kann eine Steuerung und/oder Regelung der Filteranlage insbesondere durch Vergleich der erhaltenen Ausgangsgröße mit einem oder mehreren vorbestimmten Grenz- oder Schwellwerten geschehen. Die vorbestimmten Grenz- oder Schwellwerte können dabei einzeln oder gemeinsam in einem Optimierungsschritt angepasst werden, wobei der Optimierungsschritt insbesondere durch ein künstliches neuronales Netz vorgenommen werden kann.

Gemäß einer Weiterbildung umfasst das Verfahren zur Steuerung und/oder Regelung einer Filteranlage zusätzlich das Erfassen zumindest einer dritten und einer vierten Prozessgröße der Filteranlage, das Bestimmen eines dritten Zugehörigkeitsgrads der dritten Prozessgröße zu einem dritten linguistischen Wert auf der Grundlage einer dritten vorbestimmten Zugehörigkeitsfunktion, das Bestimmen eines vierten Zugehörigkeitsgrads der vierten Prozessgröße zu einem vierten linguistischen Wert auf der Grundlage einer vierten vorbestimmten Zugehörigkeitsfunktion und das logische Verknüpfen des dritten und vierten linguistischen Wertes gemäß zumindest einer zweiten vorbestimmten Regel zum Bestimmen einer zweiten resultierenden Zugehörigkeitsfunktion der Aktion der zumindest zweiten vorbestimmten Regel, wobei die Gesamtzugehörigkeitsfunktion durch Komposition zumindest der ersten resultierenden Zugehörigkeitsfunktion der Aktion der zumindest ersten vorbestimmten Regel und der zweiten resultierenden Zugehörigkeitsfunktion der Aktion der zumindest zweiten vorbestimmten Regel bestimmt wird.

Die oben beschriebenen Optionen können hierbei ebenso auf die Auswertung der zweiten vorbestimmten Regel und möglicher weiterer Regeln angewendet werden. Insbesondere kann die Gesamtzugehörigkeitsfunktion durch Komposition der resultierenden Zugehörigkeitsfunktionen der Aktionen von mehr als zwei Regeln bestimmt werden. Die Komposition der zwei oder mehr resultierenden Zugehörigkeitsfunktionen kann insbesondere durch Vereinigung der entsprechenden Fuzzy-Mengen geschehen. Die dritte und/oder vierte Prozessgröße kann mit der ersten und/oder zweiten Prozessgröße identisch sein. Alternativ oder ergänzend kann die erste vorbestimmte Regel mit der zweiten vorbestimmten Regel identisch sein.

Durch Verknüpfen mehrerer linguistischer Regeln durch Komposition lassen sich auch komplizierte Zusammenhänge im Bereich der Prozessführung leicht formulieren. Insbesondere können durch Komposition linguistische Regeln zur Regelung gegensätzlicher Trends implementiert werden, so dass eine Optimierung der Prozessführung auf der Grundlage der Fuzzy-Logik möglich wird.

Die erfindungsgemäße Steuerung und/oder Regelung einer Filteranlage kann durch einen Mamdani-Regler oder einen Sugeno-Regler vorgenommen werden. Bei einem Sugeno-Regler kann dabei die Partitionierung des Wertebereichs der Ausgangsgröße durch eine, insbesondere lineare Abbildung der Wertebereiche der erfassten Prozessgrößen auf den Wertebereich der Ausgangsgröße ersetzt werden.

Die Steuerung und/oder Regelung der Filteranlage kann erfindungsgemäß durch das Anpassen einer oder mehrerer Stellgrößen auf der Grundlage einer oder mehrerer erhaltener Ausgangsgrößen geschehen. Dabei kann es sich bei jeder Ausgangsgröße insbesondere um die entsprechende Stellgröße handeln.

Gemäß einer Weiterbildung kann der zu steuernde oder regelnde Reinigungsprozess des Filters ein Rückspülen des Filters umfassen. Alternativ oder ergänzend dazu kann der zu steuernde oder regelnde Reinigungsprozess ein Cleaning-in-Place des Filters, ein kombiniertes Rückspülen und Cleaning-in-Place des Filters, eine Generalreinigung des Filters, sowie eine oder mehrere vorbestimmte Reinigungsprogramme umfassen. Bei einem Cleaning-in-Place handelt es sich im Allgemeinen um eine chemische Reinigung des Filters. Dabei können alkalische Reiniger und/oder Wasserstoffsuperoxid als chemische Reinigungsmittel zum Einsatz kommen. Bei einer Generalreinigung des Filters ist im Allgemeinen der vollständige Stopp des Filterprozesses nötig. Insbesondere kann zur Generalreinigung eines Filters der Austausch des Filters oder einzelner Filterkomponenten gehören.

Durch eine intelligente und optimierte Steuerung der Filterreinigungsprozesse in einer Filteranlage wird ein verlängerter Betrieb der Filteranlage sowie verbesserte Standzeiten des Filters möglich und das Verhältnis von eingesetzten Ressourcen zum Produkt im optimalen Bereich gehalten. Insbesondere wird durch Vorgabe einiger weniger linguistischer Regeln eine flexible Anpassung der Steuerung und/oder Regelung der Filteranlage an veränderliche Prozessbedingungen möglich.

Die erfassten Prozessgrößen können aus der folgenden Gruppe ausgewählt werden: Temperatur des Fluides in einem Filtereinlauf, Druck des Fluides im Filtereinlauf, Druck des Fluides in einem Filterauslauf, Druck eines Filtrats, Differenzdruck des Fluides zwischen dem Filtereinlauf und dem Filterauslauf, Differenzdruck zwischen dem Fluid im Filtereinlauf und dem Filtrat, Volumenstrom des im Filtereinlauf zugeführten Fluides, Volumenstrom des Filtrats, Strömungsgeschwindigkeit des im Filtereinlauf zugeführten Fluides, Strömungsgeschwindigkeit des Filtrats, Ausbeute des Filters, Betriebszeit des Filters, Standzeit des Filters, Laufzeit des Filters, Trübung des Fluides im Filtereinlauf, Trübung des Filtrats, Konzentrationsgradient eines abzutrennenden Partikels im Filtereinlauf, Dicke einer Deckschicht auf dem Filter, Dichte der Deckschicht auf dem Filter, Filtrationswiderstand des Filters, Filterdurchsatz, Ausschlussgrenze des Filters, Härtegrad des Fluides im Filtereinlauf, Härtegrad des Filtrats, elektrische Leitfähigkeit des Fluides im Filtereinlauf, elektrische Leitfähigkeit des Filtrats, Konzentration eines Salzes im Fluid im Filtereinlauf, Konzentration des Salzes im Filtrat, Konzentration eines für ein Filterfouling entscheidenden Ions im Filtereinlauf, Konzentration des für das Filterfouling entscheidenden Ions im Filtrat, Nummer eines Filtrations-Zyklus, Rückspülwiderstand des Filters, Volumenstrom eines Rückspülfluides, Strömungsgeschwindigkeit des Rückspülfluides in einem Rückspüleinlauf, Trübung des Rückspülfluids in einem Rückspülauslauf, Differenzdruck des Rückspülfluides zwischen dem Rückspüleinlauf und dem Rückspülauslauf, Dauer eines Rückspülprozesses und Lebenszeit des Filters, sowie deren Abweichungen von vorbestimmten Referenzkurven.

Dabei können die erfassten Prozessgrößen jeweils entweder als Wert, als zeitliche Veränderung des Wertes, als zeitliche Änderung der zeitlichen Änderung des Wertes, oder als zeitlicher Trend des Wertes erfasst werden. Ebenso können einzelne Prozessgrößen zu unterschiedlichen Zeitpunkten erfasst werden. Insbesondere kann ein und dieselbe Prozessgröße zu verschiedenen Zeitpunkten erfasst werden. Der zeitliche Trend einer Prozessgröße kann über 3, 5, 10 oder mehr Zeitpunkte erfasst werden. Ergänzend kann eine erfasste Prozessgröße über mehrere Zeitpunkte aufsummiert werden.

Durch Erfassen geeigneter Prozessgrößen wird eine präzise und flexible Steuerung und/oder Regelung der Filteranlage ermöglicht. Zudem lässt das Erfassen zeitlicher Entwicklungen von Prozessgrößen eine Projektion ihrer Entwicklung in die Zukunft und somit bessere Entscheidungskriterien zu.

Bei der Ausbeute eines Filters handelt es sich um das Verhältnis des Volumenstromes des Filtrats zu dem Volumenstrom des im Filtereinlauf zugeführten Fluides. Unter der Standzeit eines Filter versteht man im Allgemeinen die Zeit, in der dieser arbeiten kann, bis die nächste Reinigung durchgeführt werden muss.

Durch den ständigen Abfluss des Filtrats (Permeats) bildet sich während des Filtrationsvorgangs eine wachsende Grenzschicht auf dem Filter aus (Deckschicht oder Fouling). Dabei tritt ein Konzentrationsgradient der abgetrennten Partikel oder Moleküle in dieser Grenzschicht auf (Konzentrationspolarisation). Ein entsprechender Gradient kann auch über den Querschnitt des Filters auftreten. Mit steigender Dicke und/oder Dichte der Deckschicht steigt auch der Filtrationswiderstand. Ebenso kann dabei die Ausschlussgrenze, d.h. die Minimalgröße der abgetrennten Partikel oder Moleküle sinken. Ein für das Filterfouling entscheidendes Ion kann beispielsweise Eisen oder Mangan sein. Ein Filtrationszyklus ist im Allgemeinen durch zwei Filterreinigungsprozesse begrenzt.

Ein Rückspülen des Filters erfolgt im Allgemeinen durch Rückführen eines Rückspülfluides durch den Filter in umgekehrter Richtung zur Filtrationsrichtung. Dabei hängt der Widerstand, den der Filter dem Rückspülen entgegenstellt, stark von der Deckschicht, welche sich auf dem Filter gebildet hat, und der in den Filter eingedrungenen und dort, insbesondere durch adsorptive Prozesse, gebundenen Partikel oder Moleküle ab. Bei dem Rückspülfluid kann es sich insbesondere um Filtrat (Permeat) handeln.

Das Starten eines Reinigungsprozesses des Filters erfolgt auf der Grundlage der Ausgangsgröße. Dabei kann insbesondere der Schritt des Startens des Reinigungsprozesses eine Auswahl der Art des Reinigungsprozesses aus der folgenden Gruppe umfassen: Rückspülen des Filters, Cleaning-in-Place des Filters, Rückspülen und Cleaning-in-Place des Filters, Generalreinigung des Filters, und vorbestimmte Reinigungsprogramme.

Gemäß einer weiteren Weiterbildung können das Fortsetzen eines Reinigungsprozesses des Filters und/oder das Beendigen eines Reinigungsprozesses des Filters und das Starten eines Filterprozesses nach Beendigen des Reinigungsprozesses auf der Grundlage der Ausgangsgröße erfolgen.

Gemäß einer weiteren Weiterbildung des erfindungsgemäßen Verfahrens können das Steuern und/oder Regeln eines Filterprozesses oder das Fortsetzen des Filterprozesses unter Anpassen zumindest eines Prozessparameters für den Filterprozess erfolgen. Das Anpassen des zumindest einen Prozessparameters kann dabei nach den oben beschriebenen Verfahren der Fuzzy-Logik und/oder durch ein künstliches neuronales Netz geschehen. Insbesondere können die Regeln für das Anpassen des zumindest einen Prozessparameters gemäß der Fuzzy-Theorie über vorbestimmte linguistische Werte formuliert werden.

Der zumindest eine Prozessparameter kann dabei aus der folgenden Gruppe ausgewählt werden: Temperatur des Fluides in einem Filtereinlauf, Druck des Fluides im Filtereinlauf, Differenzdruck des Fluides zwischen dem Filtereinlauf und einem Filterauslauf, Differenzdruck zwischen dem Fluid im Filtereinlauf und einem Filtrat, Volumenstrom des im Filtereinlauf zugeführten Fluides, Strömungsgeschwindigkeit des im Filtereinlauf zugeführten Fluides.

Damit lässt sich auch der laufende Filtrationsbetrieb im Hinblick auf die Standzeit des verwendeten Filters optimieren.

Das erfindungsgemäße Verfahren umfasst weiterhin das Bewerten eines Reinigungserfolges des Reinigungsprozesses auf der Grundlage künstlicher neuronaler Netze.

Durch Bewerten des Reinigungserfolges lässt sich eine Optimierung der Prozessparameter während des Reinigungsprozess und auch während der Filtration durch Feedback erzielen. Insbesondere kann der Reinigungsprozess durch regelmäßiges Bewerten des Reinigungserfolges fortwährend optimiert werden.

Dabei kann das Bewerten des Reinigungserfolges insbesondere auf der Grundlage derselben Prozessgrößen geschehen, von denen teilweise oder ganz diejenige Ausgangsgröße oder diejenigen Ausgangsgrößen bestimmt wurden, in Abhängigkeit derer das Starten des Reinigungsprozesses erfolgt ist. Insbesondere kann das Bewerten des Reinigungserfolges nach demselben Verfahren geschehen, nach welchem das Starten des Reinigungsprozesses erfolgt ist. Dabei können insbesondere einer oder mehrere linguistische Werte der Vorbedingung und/oder der Aktion einer oder mehrerer Regeln negiert werden. In diesem Fall lässt sich eine besonders einfache Formulierung der benötigten linguistischen Regeln erzielen.

Gemäß einer Weiterbildung kann die Bewertung des Reinigungserfolges von demselben Fuzzy-Regler und/oder künstlichen neuronalen Netz vorgenommen werden, der die Steuerung und/oder Regelung zum Starten des Reinigungsprozesses übernimmt. Alternativ dazu kann die Bewertung durch einen separaten Fuzzy-Regler und/oder künstliches neuronales Netz vorgenommen werden.

Das Bewerten eines Reinigungserfolgs eines Reinigungsprozesses des Filters kann auf der Grundlage einer oder mehrerer Ausgangsgrößen geschehen, die nach den oben beschriebenen Verfahren mit Hilfe der Fuzzy-Logik und/oder künstlicher neuronaler Netze bestimmt wurden. Insbesondere kann das Bewerten des Reinigungserfolgs eines Reinigungsprozesses des Filters auf der Grundlage des Rückspülwiderstandes des Filters und/oder dessen zeitlicher Änderung erfolgen.

Im einfachsten Fall (und so werden viele UF betrieben) wird nur ein Rückspülschritt angeschaltet, der über eine vorgegebene Zeit über einen vorbestimmten Eingang des Filters läuft. Alternativ kann das Rückspülen mehrere Rückspülschritte umfassen, wobei beispielsweise abwechselnd oder in einer bestimmten Reihenfolge über zwei oder mehrere Moduleingänge auf der Filtratseite rückgespült wird. Auf der Unfiltratseite kann dazu ein spezieller Spülschritt eingestellt werden. Es kann auch gezielt die Richtung der Spülung geändert werden. Folgende Varianten können dabei beispielsweise ablaufen: Spülen des Unfiltratraums in zwei verschiedene Richtungen, Rückspülen durch die Membran gegen die Filtrationsrichtung.

Gemäß einer weiteren Weiterbildung kann das Rückspülen zumindest zwei Rückspülschritte umfassen, wobei die Dauer und/oder Intensität zumindest eines der zumindest zwei Rückspülschritte auf Basis der Bewertung des Reinigungserfolges gesteuert oder geregelt werden. Insbesondere können die Dauer und/oder Intensität des zumindest einen Rückspülschrittes auf der Basis der Bewertung des Reinigungserfolges einer vorangegangenen Reinigung angepasst werden. Bei der vorangegangenen Reinigung kann es sich ebenfalls um ein Rückspülen, oder aber um einen anderen Reinigungsprozess des Filters, insbesondere um einen Reinigungsprozess aus der oben beschriebenen Gruppe handeln.

Dabei kann die Intensität des zumindest einen Rückspülschrittes durch Anpassen zumindest eines Parameters aus der folgenden Gruppe von Rückspülparametern angepasst werden: Volumenstrom eines Rückspülfluides, Strömungsgeschwindigkeit des Rückspülfluides in einem Rückspüleinlauf, Druck des Rückspülfluides im Rückspüleinlauf, Temperatur des Rückspülfluides im Rückspüleinlauf, sowie deren zeitliche Änderungen.

Die Steuerung und/oder Regelung der Dauer und/oder Intensität des zumindest einen Rückspülschrittes kann nach den oben beschriebenen Verfahren gemäß der Fuzzy-Logik durch einen Fuzzy-Regler geschehen.

Zudem wird die Steuerung und/oder Regelung durch einen Neuro-Fuzzy Regler vorgenommen, wobei die Steuerung und/oder Regelung die folgenden Schritte umfasst: Protokollieren von Reinigungserfolgen und Reinigungsmisserfolgen, Bewerten der protokollierten Reinigungserfolge und Reinigungsmisserfolge durch ein künstliches neuronales Netz und Anpassen zumindest eines Prozessparameters zumindest eines Rückspülschritts aufgrund der Bewertung durch das künstliche neuronale Netz.

Durch Einsatz eines künstlichen neuronalen Netzes kann die Steuerung und/oder Regelung des Reinigungsprozesses hin zu einem optimierten Expertensystem getrimmt werden, welches auch ohne vorheriges und externes Expertenwissen den Vorgang des Rückspülens bzgl. Dauer und Intensität optimiert.

Ein künstliches neuronales Netz besteht aus einem oder mehreren künstlichen Neuronen, welche in einer oder mehreren Schichten angeordnet sind. Jedes künstliche Neuron bestimmt dabei aus einem oder mehreren Eingangssignalen ein Ausgangssignal. Aus dem einen oder mehreren Eingangssignalen kann dabei unter Zuhilfenahme einer oder mehrerer vorbestimmter Gewichte ein Netto-Input als Summe der gewichteten Eingangssignale bestimmt werden. Aus dem Netto-Input kann unter Verwendung einer Aktivierungsfunktion das Ausgangssignal bestimmt werden. Die Aktivierungsfunktion kann dabei eine Schwellwertfunktion, eine sigmoide Funktion oder eine lineare Funktion sein. Dabei hat eine sigmoide Funktion den Vorteil, dass sie stetig differenzierbar ist und somit in Optimierungsverfahren wie dem Verfahren des steilsten Gradienten eingesetzt werden kann. Ein künstliches Neuron kann insbesondere in der Form eines Perzeptrons mit variabler Schwelle vorliegen.

Ein künstliches neuronales Netz hat insbesondere den Vorteil, dass es sich um ein lernfähiges System handelt. Dabei geschieht das Lernen eines künstlichen neuronalen Netzes im Allgemeinen durch Anpassen der Gewichte der Eingangssignale der Neuronen. Insbesondere kann ein Lernschritt das Anlegen eines oder mehrerer vorbestimmter Eingangssignale und den Vergleich eines oder mehrerer Ausgangssignale des oder der Neuronen mit einem oder mehreren gewünschten Werten umfassen. Dabei können im nächsten Lernschritt die Gewichte der Neuronen so verändert werden, dass die Abweichung des oder der Ausgangssignale von dem oder den gewünschten Werten, also der Fehler, reduziert wird.

Eine Steuerung und/oder Regelung einer Filteranlage auf der Grundlage eines künstlichen neuronalen Netzes kann sich somit veränderlichen Prozessbedingungen flexibel anpassen.

Für ein mehrschichtiges neuronales Netz, wie das Multilayer Perzeptron (MLP), kann zum Durchführen eines Lernschritts der Backpropagation Algorithmus angewendet werden. Dabei kann der Backpropagation Algorithmus das Minimum einer Fehlerfunktion eines bestimmten Lernproblems durch Abstieg in der Gradientenrichtung entlang der Fehlerfunktion bestimmen.

Bei einem mehrschichtigen neuronalen Netz ist im Allgemeinen jedes Neuron einer Schicht mit den Ausgängen aller Neuronen der Vorgängerschicht verbunden. Die Neuronen der ersten Schicht (Eingangsschicht) sind mit den vorbestimmten Eingangssignalen verbunden.

Ein künstliches neuronales Netz zur Steuerung und/oder Regelung einer Filteranlage, insbesondere eines Filterreinigungsprozesses, kann offline, d.h. ohne Prozessführung, durch einen Experten trainiert werden, oder (auch) online, d.h. während laufender Prozessführung, lernen.

Insbesondere kann ein künstliches neuronales Netz in Form eines Neuro-Fuzzy Reglers mit einem Fuzzy-Regler nach dem erfindungsgemäßen Verfahren kombiniert werden. Dadurch kann die Transparenz der intuitiven Regeln von Fuzzy Systemen mit der Lernfähigkeit von künstlichen neuronalen Netzen vereint werden. Insbesondere ist ein Neuro-Fuzzy Regler in der Lage linguistische Regeln und/oder Zugehörigkeitsfunktionen zu erlernen oder bestehende zu optimieren.

Ein Neuro-Fuzzy Regler kann dabei als kooperatives System realisiert werden, in welchem das neuronale Netz unabhängig von dem Fuzzy System arbeitet und die Parameter des Fuzzy Systems durch das neuronale Netz bestimmt und/oder optimiert werden. Dabei kann das Lernen des neuronalen Netzes durch Lernen von Fuzzy-Mengen oder durch Lernen von linguistischen Regeln geschehen. Das Lernen von Fuzzy-Mengen kann durch ein modifiziertes Backpropagation-Verfahren, bei welchem anstelle der Gewichte die Lage und Form der Zugehörigkeitsfunktion der Fuzzy-Menge verändert wird, geschehen. Bei Anwendung eines Gradientenverfahrens zur Optimierung ist es dabei vorteilhaft, differenzierbare Zugehörigkeitsfunktionen wie die Gaußsche Glockenkurve zu verwenden. Ergänzend kann die Inferenz durch Produktbildung anstelle von Minimumsbildung der Zugehörigkeitsfunktionen der Prämissen geschehen. Das Lernen von Regeln kann durch Trainieren des neuronalen Netzes durch Erfassen von Regelmäßigkeiten in der Prozessführung und deren Bewertung nach vorgegebenen Kriterien geschehen. Dies kann insbesondere während des Betriebs einer Filteranlage durch einen Experten geschehen. Nach Abschluss dieses Offline Lernprozesses können die gefundenen Regelmäßigkeiten mit Hilfe vorgegebener Fuzzy-Mengen, d.h. linguistischer Werte, in Regeln ausgedrückt werden. Alternativ oder ergänzend kann ein Online Neuro-Fuzzy System zu Beginn mit einer Regelbasis ausgestattet werden, in der grob entworfene Fuzzy-Mengen miteinander verknüpft werden. Der Lernprozess durch Beobachten und Bewerten der Prozessführung kann sich dabei auf die Fuzzy-Mengen oder auf die Regeln auswirken.

Ein Neuro-Fuzzy Regler kann aber auch als hybrides System realisiert werden, in welchem die Eigenschaften der Fuzzy-Logik und des künstlichen neuronalen Netzes untrennbar vereint sind. Anstelle der Gewichte können bei einem Fuzzy-Neuron die Fuzzy-Mengen treten, wobei anstelle der gewichteten Summe und der Aktivierungsfunktion bei den Fuzzy-Neuronen einer inneren Schicht die Bestimmung der Zugehörigkeitsgrade (Fuzzyfizierung) für die Eingangssignale und deren Inferenz tritt. Anstelle der gewichteten Summe und der Aktivierungsfunktion bei den Fuzzy-Neuronen der Ausgangsschicht kann hingegen die Komposition und Defuzzyfizierung treten. Dabei kann die Fehlerfunktion am Ausgang des Systems ebenfalls als Fuzzy-Menge dargestellt werden. Eine Möglichkeit des Lernens im hybriden Neuro-Fuzzy Regler besteht darin, vor Inbetriebnahme des Reglers alle für die Steuerung und/oder Regelung der Filteranlage oder eines Unterprozesses möglichen Regeln vorzugeben und durch den Neuro-Fuzzy Regler nicht benötigte Regeln im Online-Betrieb eliminieren zu lassen.

Entsprechend kann in einer Weiterbildung das Verfahren zur Steuerung und/oder Regelung durch einen Neuro-Fuzzy Regler das Eliminieren oder Priorisieren zumindest eines Rückspülschritts umfassen. Dabei kann durch vorbestimmte Sicherheitsmechanismen verhindert werden, dass eine völlige Eliminierung eines Reinigungsprozesses des Filters eintritt. Die Tendenz eines Neuro-Fuzzy Reglers zur völligen Eliminierung eines Reinigungsprozesses des Filters kann zur Bewertung der Güte des Reinigungsprozesses verwendet werden.

Die Steuerung und/oder Regelung der Filteranlage ebenso wie die Steuerung und/oder Regelung eines Filterreinigungsprozesse kann durch einen oder mehrere Fuzzy-Regler und/oder künstliche neuronale Netze vorgenommen werden. Dabei können die Regler parallel, also unabhängig voneinander, oder zumindest teilweise in Reihe, also aufeinander aufbauend, geschaltet sein. Einer oder mehrere Fuzzy-Regler können dabei priorisiert werden.

Ein Anpassen der weiter oben beschriebenen Parameter, z.B. der in einem Optimierungsschritt angepassten Parameter, kann zusätzlich oder alternativ auch unabhängig von der erfindungsmäßen Steuerung und/oder Regelung, insbesondere durch ein externes System, wie z.B. ein programmierbares System, und/oder durch einen Experten vorgenommen werden.

Nach Bedarf kann die Menge der zu erfassenden Prozessgrößen und/oder der zu regelnden Parameter auch in Untergruppen aufgeteilt werden, wobei die Steuerung und/oder Regelung der Größen oder Parameter der Untergruppe durch ein Fuzzy-System und/oder künstliches neuronales Netz, aber auch durch Verfahren zur Regelung und/oder Optimierung nach dem Stand der Technik vorgenommen werden kann. Zu letzteren Verfahren zählen insbesondere die klassische Regelung mit PID-Reglern oder Experten-Algorithmen, sowie Optimierungsmethoden auf der Grundlage von probabilistischen Methoden, genetischen Algorithmen, oder Turing Maschinen. Durch Aufteilung des Parameterraumes lassen sich insbesondere der Bedarf an Rechenleistung und Speicher sowie die Anzahl benötigter linguistischer Regeln und/oder Trainingsbespiele reduzieren.

In einer Weiterbildung kann ausserdem die grobe Steuerung und/oder Regelung durch eine klassische Methode oder einen Fuzzy-Regler vorgenommen werden, während die Feinabstimmung der zu optimierenden Parameter durch ein künstliches neuronales Netz oder einen Neuro-Fuzzy Regler geschieht.

In einer weiteren Weiterbildung sind ein oder mehrere Fuzzy-Regler und/oder künstliche neuronale Netze direkt in einer speicherprogrammierbaren Steuerung (SPS) integriert.

Das erfindungsgemäße Verfahren, insbesondere in seiner Weiterbildung auf der Grundlage von Neuro-Fuzzy Reglern, ermöglicht eine intelligente Steuerung und/oder Regelung einer Filteranlage zur Ultrafiltration, die losgelöst von einer starren Schrittkette nach festgelegten Umschaltpunkten bei Festwerten von Pumpen und Regelventilen und fixen Grenzwerten und fixen Zeitschritten, welche als Weiterschaltkriterien den nächsten Schritt auslösen, ist. Darüber hinaus erlaubt das erfindungsgemäße Verfahren eine Optimierung des Betriebs einer Filteranlage hinsichtlich Dauer und Effizienz der Filtrations- und Filterreinigungsprozesse, sowie hinsichtlich des Einsatzes der Ressourcen, wie z.B. Filtermaterialien, Reinigungsmaterialien und Energie.

Durch Einsatz der Fuzzy-Logik ist es weiterhin nicht mehr zwingend, das Prozesswissen auf Grundlage komplizierter mathematischer Modelle (wie beispielsweise der Modellierung von Marquardt), also durch Expertenwissen in die Führung und Kontrolle des Prozessablaufs einzubinden. Vielmehr kann mittels einfacher, verbaler Wenn-Dann-Beziehungen über die oben beschriebenen linguistischen Regeln die Steuerung und Regelung des Prozessablaufs einer Filteranlage durch den gemeinen Anlagenbediener beeinflusst oder sogar ganz übernommen werden. Dies erlaubt insbesondere das vereinfachte Anpassen der Steuerung und/oder Regelung einer Filteranlage an veränderte Prozessbedingungen.

Der Einsatz eines künstlichen neuronalen Netzes kann erfindungsgemäß ohne vertieftes Prozesswissen stattfinden, wobei die Lernfähigkeit des Systems fehlendes Expertenwissen ersetzt. Dahingegen kann bei Verwendung eines Fuzzy-Reglers bekanntes Prozesswissen genutzt werden und durch einfache Interpretation und Implementierung umgesetzt werden. Die Kombination von Fuzzy-Logik und künstlichen neuronalen Netzen gestattet es, die Vorteile des jeweiligen Systems optimal zu nutzen, während die Nachteile des jeweilig anderen Systems ausgeglichen oder zumindest abgemildert werden können.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
Figur 1 stellt eine Prinzipskizze für einen Regelkreis für eine Filteranlage mit drei Fuzzy-Reglern dar, welche den Filtrationsablauf, den Zeitpunkt für eine Reinigung und den Reinigungsablauf selbst Steuern und/oder Regeln.
Figur 2 stellt die logische Verknüpfung zweier linguistischer Werte gemäß einer vorbestimmten Regel am Beispiel der Stellgröße Reinigen dar.
Figur 3 stellt die Komposition zweier vorbestimmter Regeln zur Bestimmung einer Stellgröße am Beispiel der Stellgröße 'nur Rückspülen' dar.
Figur 4 stellt die Priorisierung einer Regel am Beispiel der Stellgröße 'Filtration fortführen' dar.
Figur 5 zeigt die Bewertung des Reinigungserfolges auf der Grundlage von Fuzzy-Logik am Beispiel der Stellgröße 'Filtration wieder starten'.
Figur 6 zeigt die Optimierung des Reinigungsablaufs auf der Grundlage von Fuzzy-Logik.
Figur 7 zeigt ein Bewertungsprotokoll für Reinigungserfolge und Reinigungsmisserfolge, welches als Grundlage für die Regelung des Reinigungsablaufs durch ein künstliches neuronales Netz fungiert.

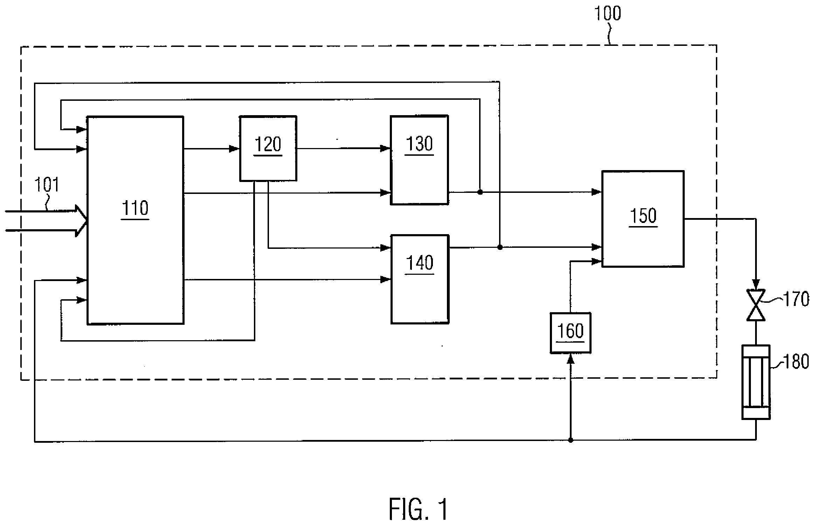

In Figur 1 ist eine beispielhafte Ausführungsform der vorliegenden Erfindung veranschaulicht. Sie stellt einen Regelkreis 100 für eine Filteranlage mit drei Fuzzy-Reglern dar. Ein Reihe von Prozessgrößen 101 werden in einer ersten Erfassungseinheit 110 erfasst und, wenn nötig gespeichert. Die Erfassungseinheit 110 dient in dieser beispielhaften Ausführung zusätzlich der Bewertung des Erfolgs von Filterreinigungsprozessen, insbesondere Rückspülprozessen, auf der Grundlage der im Bereich des Filters 180 erfassten Prozessgrößen, wie z.B. der zeitlichen Änderung des Rückspülwiderstandes.

Die von der Erfassungseinheit 110 erfassten Daten können zusätzlich in einem Normierungsglied 120 normiert und/oder weiter verarbeitet werden. In die Verarbeitung kann insbesondere Expertenwissen über den Filterprozess einfließen.

Die erfassten und eventuell weiterverarbeiteten Daten können beispielhaft an zwei unabhängige (Neuro-)Fuzzy-Regler gemäß der vorliegenden Erfindung übertragen werden, wobei ein erster Fuzzy-Regler 130 die Abweichung der aktuellen Filtration von einer Referenzkurve, die beispielsweise bei Inbetriebnahme der Filteranlage aufgenommen wurde, beobachtet. Zusammen mit den implementierten linguistischen Regeln wird der Filtrationsablauf optimal geregelt und, wenn nötig, der Abbruch der Filtration festgelegt.

Ein zweiter Fuzzy-Regler 140 bestimmt auf der Grundlage von implementierten linguistischen Regeln die Notwendigkeit des Einleitens eines Reinigungsprozesses des Filters, wie einer Spülung oder einer Cleaning-in-Place Reinigung, sowie den optimalen Zeitpunkt für das Einleiten des Reinigungsprozesses.

In der in Figur 1 dargestellten beispielhaften Ausführungsform umfasst der Regelkreis einen dritten Fuzzy-Regler 150, welcher einen Filterreinigungsprozess an sich regelt und optimiert. Dazu erhält der dritte Fuzzy-Regler 150 Ausgangsdaten der beiden Fuzzy-Regler 130 und 140, welche z.B. eine Abweichung von einer Referenzkurve und die Notwendigkeit eines Filterreinigungsprozesses quantisieren, und initiiert und regelt den Reinigungsprozess auf der Grundlage der erhaltenen Daten. Insbesondere kann es sich bei dem Fuzzy-Regler 150 um einen Neuro-Fuzzy Regler handeln, welcher in der Lage ist, ungünstige Reinigungsschritte aus einem Reinigungsprogramm völlig auszuschließen und andere wirkungsvolle und Zeit bringende Schritte zu priorisieren und/oder dem Reinigungsprogramm hinzuzufügen. Der Regler 150 kann zusätzlich die Art des Reinigungsprozesses und/oder ein geeignetes Reinigungsprogramm auswählen. Nach Bedarf steuert der Regler 150 ein Ventil 170, mit Hilfe dessen der Filter 180, z.B. durch Rückspülen, gereinigt wird. Über eine zweite Datenerfassungseinheit 160 erhält der Regler 150 Feedback über den Fortschritt des Reinigungsprozesses über Prozessdaten, die im Bereich des Filters 180 gemessen werden. Dazu kann insbesondere eine Messung der Rückspülwiderstandes des Filters gehören, wobei die zweite Datenerfassungseinheit die zeitliche Änderung des Rückspülwiderstandes bestimmt und überprüft und bei gewünschter Entwicklung des Rückspülwiderstandes ein Signal für den nächsten Spülschritt an den Fuzzy-Regler 150 sendet. Die im Bereich des Filters gemessenen Daten können ebenfalls der ersten Datenerfassungseinheit 110 zugeführt werden, um von dort aus weiter verarbeitet zu werden.

Durch die Aufteilung der Fuzzy-Regelung in drei unabhängige Fuzzy-Regler mit den Aufgaben a) der Regelung des Filters mit dem Ziel langer Standzeit mit optimiertem Fluss, optimalen Filtrationsendzeitpunkts mit Startpunkt einer Reinigung, b) der Regelung der Reinigung zum Einstellen eines optimalen Reinigungsendes durch Beobachtung der aktuellen Reinigung und c) der Optimierung der Reinigung durch Auswahl einer optimierten Reinigungsart und optimierten Reinigungsschritten und deren Anzahl basierend auf dem Lernen aus vorangegangenen Reinigungsschritten kann verhindert werden, dass die Fuzzy-Regelung durch zu viele linguistische Regeln und Werte überlastet wird und ein zu komplexes künstliches neuronales Netz erforderlich wird.

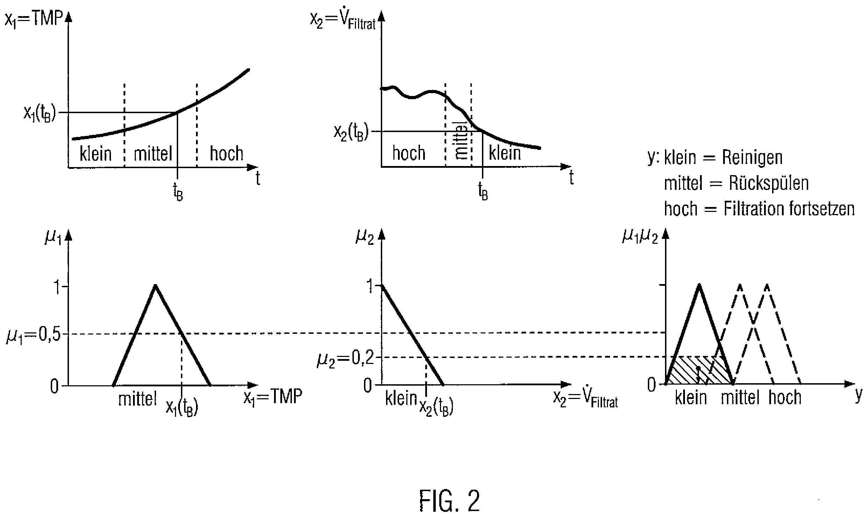

Figur 2 zeigt exemplarisch die logische Verknüpfung zweier linguistischer Werte gemäß einer vorbestimmten Regel am Beispiel der Stellgröße 'Reinigen'. Zu einem Zeitpunkt t_{B} werden die Prozessgrößen x₁ (Differenzdruck zwischen dem Fluid im Filtereinlauf und dem Filtrat, auch Transmembrandruck) und x₂ (Volumenstrom des Filtrats) gemessen. Die gestrichelten Linien zeigen die scharfe Einteilung der Messkurven in die Bereiche der linguistischen Werte 'klein', 'mittel' und 'hoch'. In den unteren Grafiken sind jeweils Zugehörigkeitsfunktionen zu den linguistischen Werten 'mittlerer Differenzdruck' und 'kleiner Volumenstrom', sowie zu dem linguistischen Wert der Aktion 'Reinigen' dargestellt. Die Zugehörigkeitsfunktionen der Prämissen stellen dabei die den oberen scharfen Grenzen entsprechenden Fuzzy-Mengen dar. Die gestrichelten Linien in den unteren Grafiken zeigen die Bestimmung der Zugehörigkeitsgrade der gemessenen Daten zu den linguistischen Werten und die logische UND Verknüpfung durch Bildung des Minimums. Die resultierende Zugehörigkeitsfunktion der Aktion 'Reinigen' der vorbestimmten Regel ist schraffiert dargestellt. Weitere denkbare Aktionen (,Rückspülen', 'Filtration fortsetzen'), welche durch weitere linguistische Regeln bestimmt werden können (siehe Diskussion unten), sind gestrichelt dargestellt.

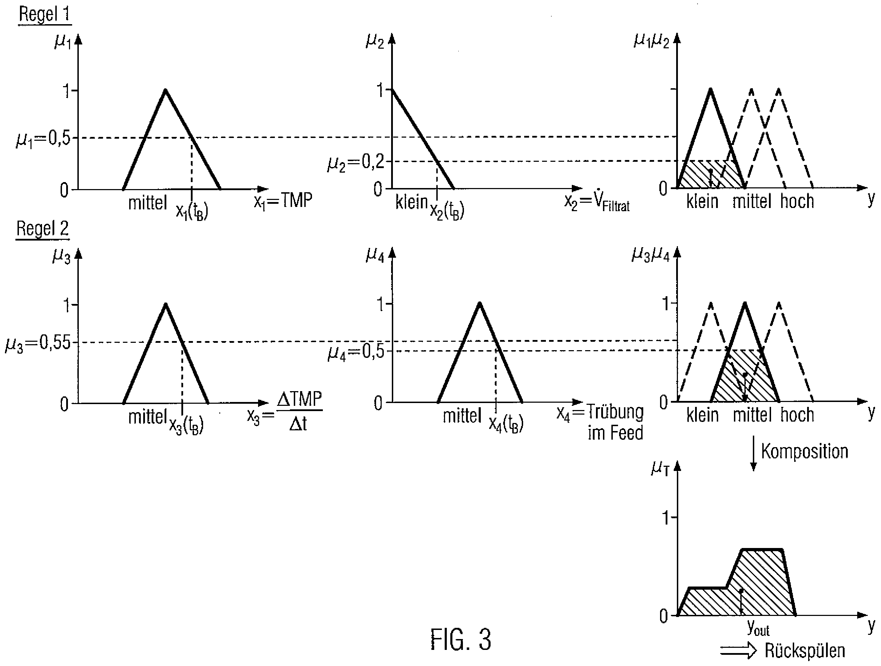

In Figur 3 wird eine Kombination der in Figur 2 dargestellten ersten linguistischen Regel mit einer zweiten linguistischen Regel durch Komposition dargestellt. Die erfasste dritte und vierte Prozessgröße sind dabei die zeitliche Änderung des Differenzdrucks zwischen dem Fluid im Filtereinlauf und dem Filtrat x₃ und die Trübung des Fluides im Filtereinlauf x₄. Somit ließe sich die zweite linguistische Regel wie folgt formulieren: Wenn zeitliche Änderung des Differenzdrucks mittel und Trübung mittel, dann Rückspülen, also Ausgangsgröße y mittel. Damit liegt mit der zweiten linguistischen Regel eine Regel für eine der alternativen Aktionen, die oben beschrieben wurden, vor. Da sich die Aktionen der ersten und zweiten linguistischen Regel auf dieselbe Ausgangsgröße erstrecken, kann eine Komposition der beiden Regeln nach den Gesetzen der Fuzzy-Logik, hier durch Vereinigung der beiden Zugehörigkeitsfunktionen zu einer Gesamtzugehörigkeitsfunktion dargestellt, erfolgen. In der dargestellten beispielhaften Ausführung wird der Wert der Ausgangsgröße durch Bildung des Schwerpunktes der unten der Gesamtzugehörigkeitsfunktion liegenden Fläche ermittelt.

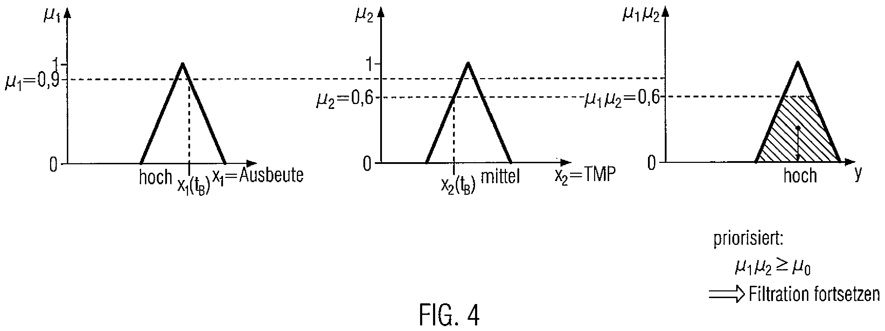

Figur 4 stellt die Priorisierung einer Regel am Beispiel einer dritten linguistischen Regel mit der Aktion 'Filtration fortsetzen', welche die dritte der oben angegebenen alternativen Aktionen ist, dar. Die erfassten Prozessgrößen sind hier die Ausbeute x₁ und der Differenzdruck zwischen dem Fluid im Filtereinlauf und dem Filtrat x₂, wobei die dritte linguistische Regel wie folgt lautet: Wenn Ausbeute hoch und Differenzdruck mittel, dann Filtration fortsetzen, also Ausgangsgröße y hoch. Da die Regel, z.B. durch Setzen entsprechender Wichtungen durch ein künstliches neuronales Netz, priorisiert ist, findet keine Komposition der resultierenden Zugehörigkeitsfunktion mit einer der resultierenden Zugehörigkeitsfunktionen einer der beiden anderen Regeln statt. Stattdessen wird in dieser Ausführung beispielhaft der Zugehörigkeitsgrad der Aktion mit einem Schwellwert verglichen, um die entsprechende Stellgröße zu setzen. Das gezeigte Beispiel demonstriert, wie eine priorisierte Regel den Steuer- oder Regelungsprozess dominiert.

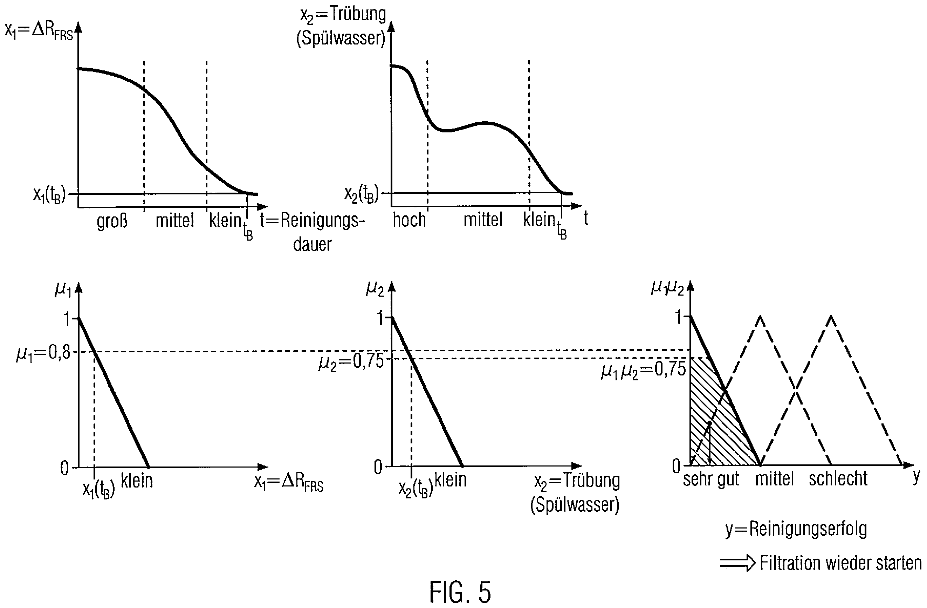

Figur 5 zeigt exemplarisch die Bewertung eines Reinigungserfolges mit Hilfe eines Fuzzy-Reglers. Dazu sind in der oberen Reihe zunächst die zeitlichen Entwicklungen der Prozess-größen zeitliche Änderung des Rückspülwiderstandes des Filters x₁ und Trübung im Spülwasser, also im Rückspülfluid, im Rückspülauslauf x₂ dargestellt, welche zum Zeitpunkt t_{B} erfasst werden. Die entsprechenden linguistischen Werte der Regel 'Wenn zeitliche Änderung des Rückspülwiderstandes klein und Trübung im Spülwasser klein, dann sehr guter Reinigungserfolg' sind in der unteren Zeile abgebildet. Wegen der asymmetrischen Form der Zugehörigkeitsfunktion der Aktion 'Reinigungserfolg sehr gut' kann in diesem Fall auch die Schwerpunktsmethode zum Bestimmen der Ausgangsgröße verwendet werden. Die Figur zeigt, wie dasselbe Verfahren der Fuzzy-Logik, welches zuvor zur Steuerung und/oder Regelung angewandt wurde, nun auch zur Bewertung eines Reinigungserfolges verwendet werden kann. Das Setzen der entsprechenden Stellgröße 'Filtration wieder starten' geschieht hier auf der Grundlage der Bewertung des Reinigungserfolges.

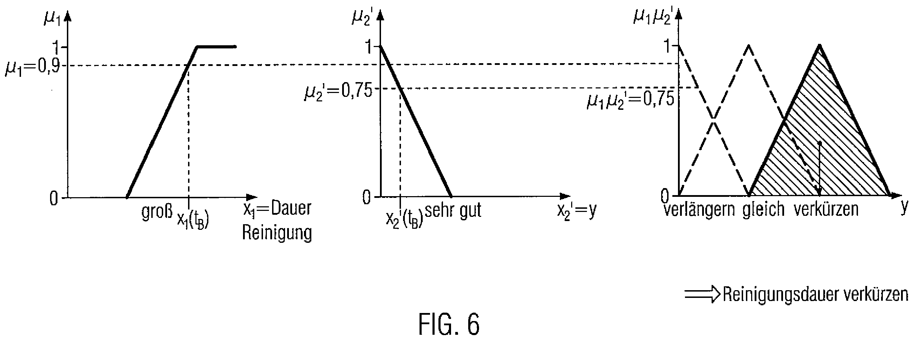

Figur 6 zeigt schließlich, wie sich durch Aneinanderreihung linguistischer Regeln eine Verkettung ergibt. Die Ausgangsgröße x₂'=y der linguistischen Regel von Figur 5 wird hier mit der Prozessgröße Dauer der Reinigung x₁ nach der Regel 'Wenn Dauer der Reinigung lang und Reinigungserfolg sehr gut, dann Reinigungsdauer verkürzen' verknüpft. Die Regel demonstriert, wie ausgehend von der Bewertung eines Reinigungserfolges durch einen Fuzzy-Regler die Reinigungsdauer auf der Grundlage der Fuzzy-Logik optimiert werden kann. Somit zeigt Figur 6 einen Optimierungsschritt durch einen reinen Fuzzy-Regler. Alternativ oder ergänzend dazu kann der Optimierungsschritt und/oder der Bewertungsschritt durch ein künstliches neuronales Netz vorgenommen werden.

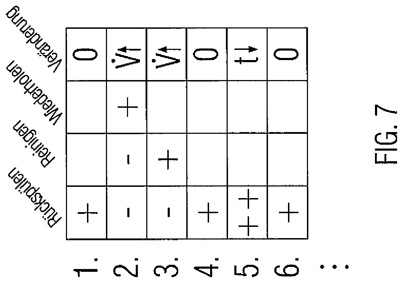

Eine Bewertungstabelle für Reinigungserfolge der Prozessschritte Rückspülen, Reinigen (Cleaning-in-Place) und Wiederholen des Reinigens ist in Figur 7 dargestellt. Basierend auf der Bewertungstabelle kann ein Vorschlag für eine Änderung der Prozessparameter zwecks Optimierung erfolgen. Der Vorschlag kann mithilfe eines künstlichen neuronalen Netzes, eines Fuzzy-Reglers oder eines Neuro-Fuzzy-Reglers erfolgen.

Pluszeichen deuten einen Erfolg, Minuszeichen einen Misserfolg der Aktion an, während ein doppeltes Pluszeichen einen wiederholten oder besonders guten Erfolg andeutet. Bei wiederholtem Erfolg des Rückspülens (siehe Schritt 5) wird hierbei z.B. die Aktion 'Rückspüldauer verkürzen' ausgelöst. Die Schrittweite der Anpassungsschritte, z.B. der Verkürzung der Rückspüldauer, kann dabei vorgegeben sein oder selbst durch einen (Neuro-)Fuzzy-Regler angepasst werden. Die Regelung kann hierbei wie oben beschrieben durch einen Fuzzy-Regler, einen Neuro-Fuzzy-Regler oder ein künstliches neuronales Netz vorgenommen werden.

Die oben beschriebenen Figuren zeigen, wie durch einfache, intuitive Regeln aufbauend auf den Prinzipien der Fuzzy-Logik eine reproduzierbare und optimierte Prozessführung ohne spezielles Expertenwissen möglich wird. Die automatische Optimierung des Prozess durch Fuzzy-Regler und/oder künstliche neuronale Netze übernimmt dabei die übliche Rolle des Experten.

## Patentansprüche

1. Verfahren zur Steuerung und/oder Regelung einer Filteranlage zur Ultrafiltration von Fluiden, insbesondere zur Ultrafiltration von Wasser, mit einem Filter (180), wobei die Steuerung und/oder Regelung auf der Grundlage einer Fuzzy-Logik und/oder künstlicher neuronaler Netze erfolgt, mit den Schritten:
Erfassen zumindest einer ersten und einer zweiten Prozessgröße der Filteranlage;
Bestimmen eines ersten Zugehörigkeitsgrads der ersten Prozessgröße zu einem ersten linguistischen Wert auf der Grundlage einer ersten vorbestimmten Zugehörigkeitsfunktion;
Bestimmen eines zweiten Zugehörigkeitsgrads der zweiten Prozessgröße zu einem zweiten linguistischen Wert auf der Grundlage einer zweiten vorbestimmten Zugehörigkeitsfunktion;
logisches Verknüpfen des ersten und zweiten linguistischen Wertes gemäß zumindest einer ersten vorbestimmten Regel zum Bestimmen einer ersten resultierenden Zugehörigkeitsfunktion der Aktion der ersten vorbestimmten Regel;
Bestimmen einer Gesamtzugehörigkeitsfunktion auf der Grundlage der ersten resultierenden Zugehörigkeitsfunktion der Aktion der zumindest ersten vorbestimmten Regel;
Erhalten einer Ausgangsgröße aus der Gesamtzugehörigkeitsfunktion; und
Steuern und/oder Regeln der Filteranlage in Abhängigkeit von der Ausgangsgröße,
wobei das Starten eines Reinigungsprozesses des Filters (180) auf der Grundlage der Ausgangsgröße erfolgt;
wobei der Reinigungsprozess ein Rückspülen umfasst; und
**dadurch gekennzeichnet dass** die Steuerung und/oder Regelung durch einen Neuro-Fuzzy Regler vorgenommen wird,
und weiterhin die Schritte umfassend:
Protokollieren von Reinigungserfolgen und Reinigungsmisserfolgen des Reinigungsprozesses;
Bewerten der protokollierten Reinigungserfolge und Reinigungsmisserfolge durch ein künstliches neuronales Netz; und
Anpassen zumindest eines Prozessparameters zumindest eines Rückspülschritts des Reinigungsprozesses aufgrund der Bewertung durch das künstliche neuronale Netz.

2. Das Verfahren gemäß Anspruch 1, zusätzlich umfassend:
Erfassen zumindest einer dritten und einer vierten Prozessgröße der Filteranlage;
Bestimmen eines dritten Zugehörigkeitsgrads der dritten Prozessgröße zu einem dritten linguistischen Wert auf der Grundlage einer dritten vorbestimmten Zugehörigkeitsfunktion;
Bestimmen eines vierten Zugehörigkeitsgrads der vierten Prozessgröße zu einem vierten linguistischen Wert auf der Grundlage einer vierten vorbestimmten Zugehörigkeitsfunktion; und
logisches Verknüpfen des dritten und vierten linguistischen Wertes gemäß zumindest einer zweiten vorbestimmten Regel zum Bestimmen einer zweiten resultierenden Zugehörigkeitsfunktion der Aktion der zumindest zweiten vorbestimmten Regel; wobei:
die Gesamtzugehörigkeitsfunktion durch Komposition zumindest der ersten resultierenden Zugehörigkeitsfunktion der Aktion der zumindest ersten vorbestimmten Regel und der zweiten resultierenden Zugehörigkeitsfunktion der Aktion der zumindest zweiten vorbestimmten Regel bestimmt wird.

3. Das Verfahren gemäß Anspruch 1 oder 2, wobei die erfassten Prozessgrößen aus der folgenden Gruppe ausgewählt werden: Temperatur des Fluides in einem Filtereinlauf, Druck des Fluides im Filtereinlauf, Druck des Fluides in einem Filterauslauf, Druck eines Filtrats, Differenzdruck des Fluides zwischen dem Filtereinlauf und dem Filterauslauf, Differenzdruck zwischen dem Fluid im Filtereinlauf und dem Filtrat, Volumenstrom des im Filtereinlauf zugeführten Fluides, Volumenstrom des Filtrats, Strömungsgeschwindigkeit des im Filtereinlauf zugeführten Fluides, Strömungsgeschwindigkeit des Filtrats, Ausbeute des Filters, Betriebszeit des Filters, Standzeit des Filters, Laufzeit des Filters, Trübung des Fluides im Filtereinlauf, Trübung des Filtrats, Konzentrationsgradient eines abzutrennenden Partikels im Filtereinlauf, Dicke einer Deckschicht auf dem Filter, Dichte der Deckschicht auf dem Filter, Filtrationswiderstand des Filters, Filterdurchsatz, Ausschlussgrenze des Filters, Härtegrad des Fluides im Filtereinlauf, Härtegrad des Filtrats, elektrische Leitfähigkeit des Fluides im Filtereinlauf, elektrische Leitfähigkeit des Filtrats, Konzentration eines Salzes im Fluid im Filtereinlauf, Konzentration des Salzes im Filtrat, Konzentration eines für ein Filterfouling entscheidenden Ions im Filtereinlauf, Konzentration des für das Filterfouling entscheidenden Ions im Filtrat, Nummer eines Filtrations-Zyklus, Rückspülwiderstand des Filters, Volumenstrom eines Rückspülfluides, Strömungsgeschwindigkeit des Rückspülfluides in einem Rückspüleinlauf, Trübung des Rückspülfluides in einem Rückspülauflauf, Differenzdruck des Rückspülfluides zwischen dem Rückspüleinlauf und dem Rückspülauslauf, Dauer eines Rückspülprozesses und Lebenszeit des Filters, sowie deren Abweichungen von vorbestimmten Referenzkurven;
wobei die erfassten Prozessgrößen jeweils entweder als Wert, als zeitliche Veränderung des Wertes, als zeitliche Änderung der zeitlichen Änderung des Wertes, oder als zeitlicher Trend des Wertes erfasst werden.

4. Das Verfahren gemäß einem der Ansprüche 1 bis 3, wobei der Schritt des Startens des Reinigungsprozesses eine Auswahl der Art des Reinigungsprozesses aus der folgenden Gruppe umfasst: Rückspülen des Filters (180), Cleaning-in-Place des Filters (180), Rückspülen und Cleaning-in-Place des Filters (180), Generalreinigung des Filters (180), und vorbestimmte Reinigungsprogramme.

5. Das Verfahren gemäß einem der Ansprüche 1 bis 4, wobei zusätzlich das Fortsetzen des Reinigungsprozesses des Filters (180) und/oder das Beendigen des Reinigungsprozesses und das Fortsetzen eines Filterprozesses nach Beendigen des Reinigungsprozesses auf der Grundlage der Ausgangsgröße erfolgen.

6. Das Verfahren gemäß Anspruch 5, in dem das Fortsetzen des Filterprozesses unter Anpassen zumindest eines Prozessparameters für den Filterprozess erfolgt.

7. Das Verfahren gemäß Anspruch 6, wobei der zumindest eine Prozessparameter für den Filterprozess aus der folgenden Gruppe ausgewählt wird: Temperatur des Fluides in einem Filtereinlauf, Druck des Fluides im Filtereinlauf, Differenzdruck des Fluides zwischen dem Filtereinlauf und einem Filterauslauf, Differenzdruck zwischen dem Fluid im Filtereinlauf und einem Filtrat, Volumenstrom des im Filtereinlauf zugeführten Fluides, Strömungsgeschwindigkeit des im Filtereinlauf zugeführten Fluides.

8. Das Verfahren gemäß einem der vorhergehenden Ansprüche, in dem das Bewerten der protokollierten Reinigungserfolge und Reinigungsmisserfolge auf der Grundlage der Ausgangsgröße erfolgt.

9. Das Verfahren gemäß einem der vorhergehenden Ansprüche, wobei das Rückspülen zumindest zwei Rückspülschritte umfasst, welche sich durch eine Richtung der Spülung unterscheiden, wobei die Dauer und/oder Intensität zumindest eines der zumindest zwei Rückspülschritte auf Basis der Bewertung der protokollierten Reinigungserfolge und Reinigungsmisserfolge gesteuert oder geregelt werden.

10. Das Verfahren gemäß Anspruch 9, weiterhin das Eliminieren oder Priorisieren zumindest eines Rückspülschritts umfassend.

## Claims

1. Method for the open-loop control and / or closed-loop control of a filter system for the ultrafiltration of fluids, particularly for the ultrafiltration of water, with a filter (180), wherein the open-loop control and / or closed-loop control takes place on the basis of a fuzzy logic and / or artificial neural networks, with the steps:
capturing at least a first and a second process variable of the filter system;
determining a first grade of membership of the first process variable to a first linguistic term on the basis of a first predetermined membership function;
determining a second grade of membership of the second process variable to a second linguistic term on the basis of a second predetermined membership function;
logically combining the first and second linguistic terms according to at least a first predetermined rule for the determination of a first resulting membership function of the action of the first predetermined rule;
determining an overall membership function on the basis of the first resulting membership function of the action of the at least first predetermined rule;
obtaining an output value from the overall membership function; and
open-loop control and / or closed-loop control of the filter system depending on the output value,
wherein the starting of the cleaning process of the filter (180) takes place on the basis of the output value;
wherein the cleaning process comprises a backwashing; and
**characterized in that** the open-loop control and / or closed-loop control is carried out by means of a neuro-fuzzy controller,
and furthermore comprising the steps:
logging of cleaning successes and cleaning failures of the cleaning process;
assessment of the logged cleaning successes and cleaning failures by means of an artificial neural network; and
adjustment of at least one process parameter of at least one backwashing step of the cleaning process on the basis of the assessment by means of the artificial neural network.

2. The method according to Claim 1, additionally comprising:
capturing at least a third and a fourth process variable of the filter system;
determining a third grade of membership of the third process variable to a third linguistic term on the basis of a third predetermined membership function;
determining a fourth grade of membership of the fourth process variable to a fourth linguistic term on the basis of a fourth predetermined membership function; and
logically combining the third and fourth linguistic terms according to at least a second predetermined rule for the determination of a second resulting membership function of the action of the at least second predetermined rule; wherein:
the overall membership function is determined by means of the composition of at least the first resulting membership function of the action of the at least first predetermined rule and the second resulting membership function of the action of the at least second predetermined rule.

3. The method according to Claim 1 or 2, wherein the captured process variables are selected from the following group: temperature of the fluid in a filter inlet, pressure of the fluid in the filter inlet, pressure of the fluid in a filter outlet, pressure of a filtrate, differential pressure of the fluid between the filter inlet and the filter outlet, differential pressure between the fluid in the filter inlet and the filtrate, volume flow of the fluid fed in the filter inlet, volume flow of the filtrate, flow rate of the fluid fed in the filter inlet, flow rate of the filtrate, yield of the filter, operating time of the filter, service life of the filter, running time of the filter, turbidity of the fluid in the fluid inlet, turbidity of the filtrate, concentration gradient of a particle that is to be separated in the filter inlet, thickness of a cover layer on the filter, density of the cover layer on the filter, filtration resistance of the filter, filter throughput, cut-off limit of the filter, hardness grade of the fluid in the filter inlet, hardness grade of the filtrate, electrical conductivity of the fluid in the filter inlet, electrical conductivity of the filtrate, concentration of a salt in the fluid in the filter inlet, concentration of the salt in the filtrate, concentration in the filter inlet of an ion that is critical for filter fouling, concentration in the filtrate of the ion that is critical for filter fouling, number of a filtration cycle, backwashing resistance of the filter, volume flow of a backwashing fluid, flow rate of the backwashing fluid in a backwashing inlet, turbidity of the backwashing fluid in a backwashing outlet, differential pressure of the backwashing fluid between the backwashing inlet and the backwashing outlet, duration of a backwashing process and lifetime of the filter, as well as their deviations from predetermined reference curves;
wherein each of the captured process variables is captured either as a value, as a temporal change of the value, as a temporal change in the temporal change of the value or as a temporal trend of the value.

4. The method according to one of the Claims 1 to 3, wherein the step of the starting of the cleaning process comprises a selection of the type of the cleaning process from the following group: backwashing of the filter (180), cleaning-in-place of the filter (180), backwashing and cleaning-in-place of the filter (180), general cleaning of the filter (180) and predetermined cleaning programmes.

5. The method according to one of the Claims 1 to 4, wherein additionally the continuation of the cleaning process of the filter (180) and / or the termination of the cleaning process and the starting of a filtering process after the termination of the cleaning process take place on the basis of the output value.

6. The method according to Claim 5, in which the continuation of the filtering process takes place with the adjustment of at least one process parameter for the filtering process.

7. The method according to Claim 6, wherein the at least one process parameter for the filtering process is selected from the following group: temperature of the fluid in a filter inlet, pressure of the fluid in the filter inlet, differential pressure of the fluid between the filter inlet and a filter outlet, differential pressure between the fluid in the fluid inlet and a filtrate, volume flow of the fluid fed in the filter inlet, flow rate of the fluid fed in the filter inlet.

8. The method according to one of the preceding Claims, in which the assessment of the logged cleaning successes and cleaning failures takes place on the basis of the output value.

9. The method according to one of the preceding Claims, wherein the backwashing comprises at least two backwashing steps which differ in a direction of the backwashing, wherein the duration and / or intensity of at least one of the at least two backwashing steps is open-loop controlled or closed-loop controlled on the basis of the assessment of the logged cleaning successes and cleaning failures.

10. The method according to Claim 9, furthermore comprising the elimination or prioritisation of at least one backwashing step.

## Revendications

1. Procédé pour la commande et/ou la régulation d'une installation de filtration pour l'ultrafiltration de fluides, notamment pour l'ultrafiltration d'eau, comprenant un filtre (180), la commande et/ou la régulation s'effectuant sur la base d'une logique floue dite logique Fuzzy et/ou de réseaux neuronaux artificiels, le procédé comportant les étapes suivantes :
le relevé d'au moins une première et une deuxième grandeur de processus de l'installation de filtration ;
la détermination d'un premier degré d'appartenance de la première grandeur de processus à une première valeur linguistique sur la base d'une première fonction d'appartenance prédéterminée ;
la détermination d'un deuxième degré d'appartenance de la deuxième grandeur de processus à une deuxième grandeur linguistique sur la base d'une deuxième fonction d'appartenance prédéterminée ;
la combinaison logique de la première et de la deuxième valeur linguistique conformément à au moins une première règle prédéterminée pour déterminer une première fonction d'appartenance résultante de l'action de la première règle prédéterminée ;
la détermination d'une fonction d'appartenance globale sur la base de la première fonction d'appartenance résultante de l'action de ladite au moins une première règle prédéterminée ;
l'obtention d'une grandeur de sortie à partir de la fonction d'appartenance globale ; et
la commande et/ou la régulation de l'installation de filtration en fonction de la grandeur de sortie,
le démarrage d'un processus de nettoyage du filtre (180) étant effectué sur la base de la grandeur de sortie ;
le processus de nettoyage comprenant une phase de lavage à contre-courant ; et
**caractérisé en ce que** la commande et/ou la régulation est effectuée par un régulateur à logique floue et neuronale,
et **en ce que** le procédé comprend en outre les étapes suivantes :
l'enregistrement sous forme de protocoles de succès de nettoyage et d'échecs de nettoyage du processus de nettoyage ;
l'évaluation des succès de nettoyage et échecs de nettoyage enregistrés sous forme de protocoles, par un réseau neuronal artificiel ; et
l'adaptation d'au moins un paramètre de processus d'au moins une étape de lavage à contre-courant du processus de nettoyage, sur la base de l'évaluation par le réseau neuronal artificiel.

2. Le procédé selon la revendication 1, comprenant en outre :
le relevé d'au moins une troisième et d'une quatrième grandeur de processus de l'installation de filtration ; la détermination d'un troisième degré d'appartenance de la troisième grandeur de processus à une troisième valeur linguistique sur la base d'une troisième fonction d'appartenance prédéterminée ;
la détermination d'un quatrième degré d'appartenance de la quatrième grandeur de processus à une quatrième grandeur linguistique sur la base d'une quatrième fonction d'appartenance prédéterminée ;
la combinaison logique de la troisième et de la quatrième valeur linguistique conformément à au moins une deuxième règle prédéterminée pour déterminer une deuxième fonction d'appartenance résultante de l'action de ladite au moins une deuxième règle prédéterminée ;
la fonction d'appartenance globale étant déterminée par composition d'au moins la première fonction d'appartenance résultante de l'action de ladite au moins une première règle prédéterminée, et de la deuxième fonction d'appartenance résultante de l'action de ladite au moins deuxième règle prédéterminée.

3. Le procédé selon la revendication 1 ou la revendication 2, d'après lequel les grandeurs de processus relevées sont choisies parmi celles du groupe suivant : la température du fluide dans une entrée de filtre, la pression du fluide dans l'entrée du filtre, la pression du fluide dans une sortie du filtre, la pression d'un filtrat, la pression différentielle du fluide entre l'entrée du filtre et la sortie du filtre, la pression différentielle entre le fluide dans l'entrée de filtre et le filtrat, le débit-volume du fluide amené à l'entrée du filtre, le débit-volume du filtrat, la vitesse d'écoulement du fluide amené à l'entrée du filtre, la vitesse d'écoulement du filtrat, le rendement du filtre, le temps de fonctionnement du filtre, la durée de vie du filtre, la durée de marche du filtre, le trouble du fluide à l'entrée du filtre, le trouble du filtrat, le gradient de concentration d'une particule à séparer à l'entrée du filtre, l'épaisseur d'une couche de recouvrement sur le filtre, la densité de la couche de recouvrement sur le filtre, la résistance à la filtration du filtre, la capacité de passage du filtre, la limite d'exclusion du filtre, le degré de dureté du fluide à l'entrée du filtre, le degré de dureté du filtrat, la conductivité électrique du fluide à l'entrée du filtre, la conductivité électrique du filtrat, la concentration d'un sel dans le fluide à l'entrée du filtre, la concentration du sel dans le filtrat, la concentration d'un ion décisif pour un colmatage de filtre à l'entrée du filtre, la concentration de l'ion décisif pour un colmatage de filtre dans le filtrat, le numéro d'un cycle de filtration, la résistance au lavage à contre-courant du filtre, le débit volume d'un fluide de lavage à contre-courant, la vitesse d'écoulement du fluide de lavage à contre-courant dans une entrée de lavage à contre-courant, le trouble du fluide de lavage à contre-courant dans une sortie de lavage à contre-courant, la pression différentielle du fluide de lavage à contre-courant entre l'entrée de lavage à contre-courant et la sortie de lavage à contre-courant, la durée du processus de lavage à contre-courant et la durée de vie du filtre, ainsi que leurs écarts par rapport à des courbes de référence prédéterminées ;
les grandeurs de processus relevées étant relevées chacune respectivement soit en tant que valeur, en tant que variation dans le temps de la valeur, en tant que variation dans le temps de ladite variation dans le temps de la valeur, soit en tant que tendance dans le temps de la valeur.

4. Le procédé selon l'une des revendications 1 à 3, d'après lequel l'étape du démarrage du processus de nettoyage comprend la sélection du type du processus de nettoyage parmi le groupe suivant : lavage à contre-courant du filtre (180), nettoyage en place du filtre (180), lavage à contre-courant et nettoyage en place du filtre (180), nettoyage général du filtre (180), et des programmes de nettoyage prédéfinis.

5. Le procédé selon l'une des revendications 1 à 4, d'après lequel, en outre, la poursuite du processus de nettoyage du filtre (180) et/ou la cessation du processus de nettoyage et la poursuite d'un processus de filtration après cessation du processus de nettoyage, sont effectuées sur la base de la grandeur de sortie.

6. Le procédé selon la revendication 5, d'après lequel la poursuite du processus de filtration s'effectue avec une adaptation d'au moins un paramètre de processus pour le processus de filtration.

7. Le procédé selon la revendication 6, d'après lequel ledit au moins un paramètre de processus pour le processus de filtration est sélectionné parmi ceux du groupe suivant : la température du fluide à l'entrée du filtre, la pression du fluide à l'entrée du filtre, la pression différentielle du fluide entre l'entrée du filtre et une sortie du filtre, la pression différentielle entre le fluide à l'entrée du filtre et un filtrat, le débit volume du fluide amené à l'entrée de filtre, la vitesse d'écoulement du fluide amené à l'entrée du filtre.

8. Le procédé selon l'une des revendications précédentes, d'après lequel l'évaluation des succès de nettoyage et échecs de nettoyage enregistrés sous forme de protocoles, s'effectue sur la base de la grandeur de sortie.

9. Le procédé selon l'une des revendications précédentes, d'après lequel le lavage à contre-courant comprend au moins deux étapes de lavage à contre-courant, qui se distinguent par une direction du lavage, la durée et/ou l'intensité d'au moins une desdites au moins deux étapes de lavage à contre-courant étant commandées ou régulées sur la base de l'évaluation des succès de nettoyage et échecs de nettoyage enregistrés sous forme de protocoles.

10. Le procédé selon la revendication 9, comprenant par ailleurs l'élimination ou la priorisation d'au moins une étape de lavage à contre-courant.
